# EUROPEAN PATENT APPLICATION

(11) **EP 2 332 692 A1**
(43) Date of publication of application: **15.06.2011**
(21) Application number: 10193497.4
(22) Date of filing: 02.12.2010
(51) Int. Cl.: B24B 41/04, B24B 49/00, B23Q 1/70

(54) **A machine for surface machining, particularly adapted for machining low-thickness parts**

(30) Priority: 11.12.2009 IT PD20090370
(71) Applicant: Worldmec S.r.l., 36065 Mussolente, Frazione CASONI (VI) (IT)
(72) Inventor: Bernardi, Roberto, 36065 Mussolente VI (IT)
(74) Representative: Modiano, Micaela Nadia

(57) **Abstract**

A machine (10) for surface machining, particularly adapted for machining low-thickness parts, comprising
- a footing (11),
- a supporting fixture (12) for a part to be machined, which forms a work area for the part, which is associated with the footing,
- two working heads (13, 14), which comprise tools (15) and means (16) for actuating the tools (15),
- an articulated supporting structure (16), which is associated with the footing and supports the working heads (13, 14) in a configuration that can be modulated with respect to the work area,
- means (17) for setting the maximum penetration (A) of the tools (15) with respect to the surface (B) of a part to be machined which is arranged in the work area,
- means (18) for limiting the action force (C) of the working head (13) on the part to be machined.

## Description

The present invention relates to a machine for surface machining, particularly adapted for machining low-thickness parts.

As is known, ornamental objects which are hollow or which have surfaces with low thickness are frequently decorated when cold with engravings that reproduce various shapes and motifs.

A commonly reported problem in the field of decorating these objects consists in the ease with which they are dented by the effect of the force exerted on their surfaces for performing the decorations.

In the current state of the art, for preventing possible dents or the formation of through cuts or holes, work on particularly penetrable surfaces is done by hand, to the detriment of productivity and of decoration costs.

The wide variability of shapes of the pieces to be worked on, as well as the variability of their dimensions, is a further major obstacle to the implementation of such decoration by means of automatic machines for industrial use.

Indeed, with the machines known today, small variations in size, shape or positioning of the piece can cause the formation of cuts and dents or, in the other extreme, decorations that are insufficient or even absent.

The aim of the present invention is to solve the above-mentioned problems, by providing a machine for surface machining, particularly adapted for machining low-thickness parts, which makes it possible to automate such decorations.

Within this aim, an object of the invention is to provide a machine that makes it possible to prevent dents, the perforation, or the cutting through of the parts being worked on.

Another object of the invention is to provide a machine for which the shapes or types of objects to be worked on are not constraints.

A further object of the invention is to provide a machine that makes it possible to work on simple products like pipes, chains, and plates, or on complex products like caps, both convex and concave, corrugated surfaces, all the way up to three-dimensional objects of any shape.

Another object of the invention is to provide a machine that makes it possible to carry out machining both with front-acting tools and with peripheral-action tools.

This aim, as well as these and other objects which will become better evident hereinafter, are achieved by a machine for surface machining, particularly adapted for machining low-thickness parts, characterized in that it comprises
- a footing,
- a supporting fixture for a part to be machined, which forms a work area for said part, which is associated with said footing,
- two working heads, which comprise tools and means for actuating the tools,
- an articulated supporting structure, which is associated with said footing and supports the working heads in a configuration that can be modulated with respect to the work area,
- means for setting the maximum penetration of said at least one tool with respect to the surface of said part to be machined which is arranged in said work area,
- means for limiting the action force of said working head on said part to be machined which is arranged in said work area.

Further characteristics and advantages of the invention will become better apparent from the following detailed description of preferred, but not exclusive, embodiments of the machine according to the invention, illustrated by way of non-limiting example in the accompanying drawings, wherein:

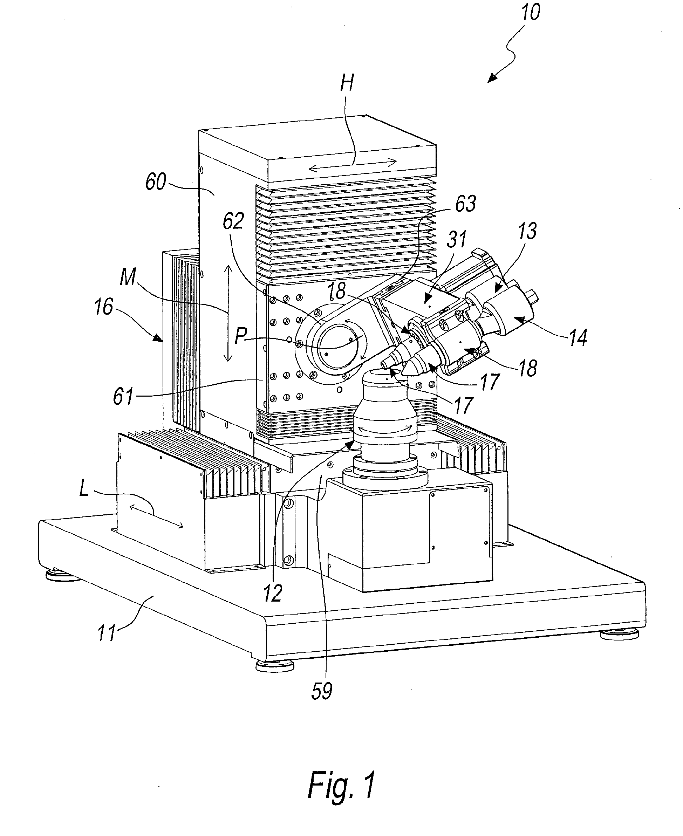

Figure 1 is a perspective view of a machine according to the invention;

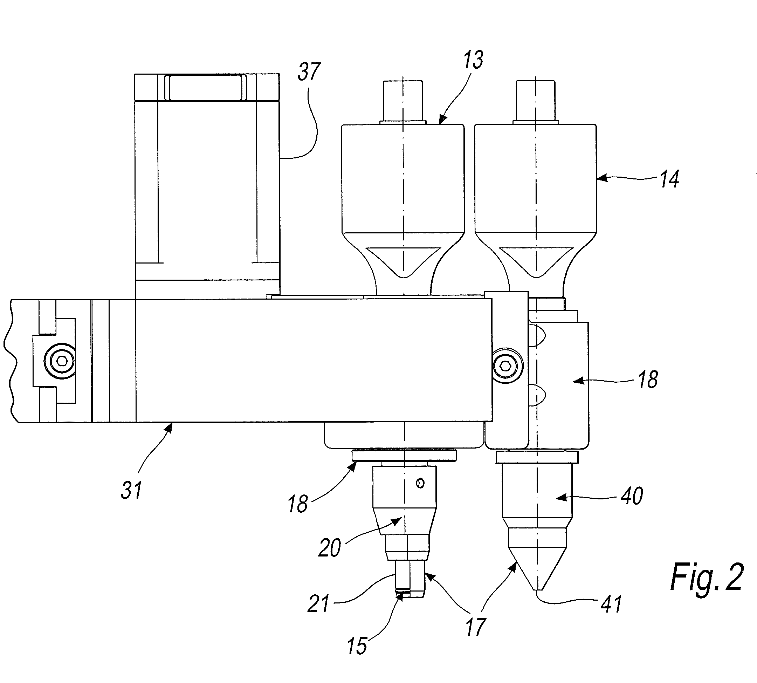

Figure 2 is an enlarged-scale view of a detail of the machine according to the invention;

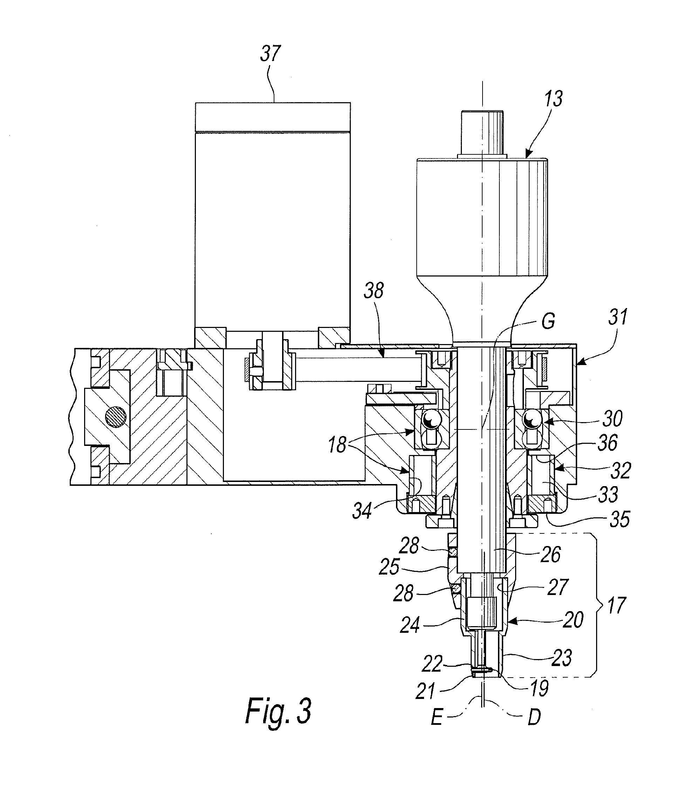

Figure 3 is a partially sectional view of a detail of the machine according to the invention;
Figure 4 is an enlarged-scale and partially sectional view of the machine according to the invention;
Figure 5 is an enlarged-scale and partially sectional view of the machine according to the invention, in a condition of use;

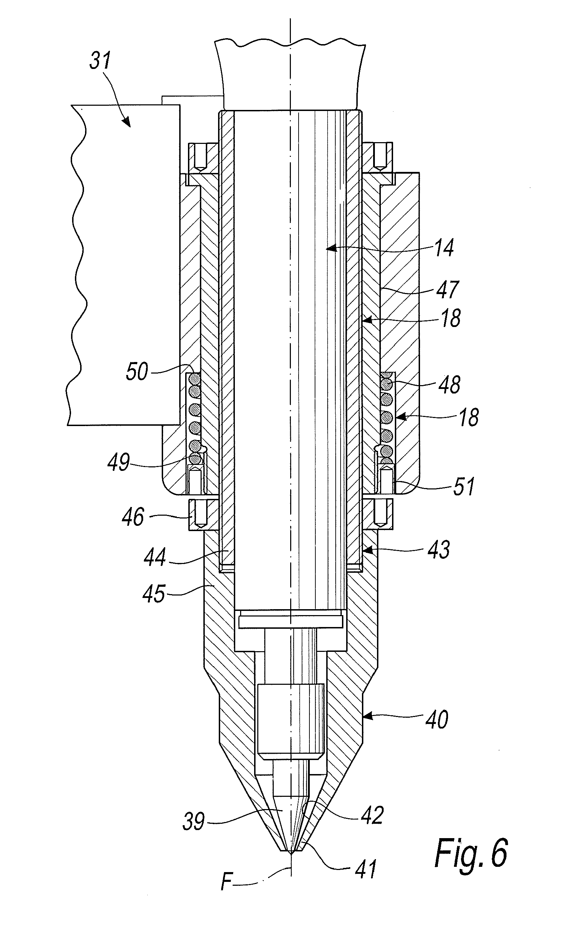

Figure 6 is another enlarged-scale and partially sectional view of the machine according to the invention;
Figure 7 is an enlarged-scale and partially sectional view of the machine according to the invention, in a condition of use;
Figures 8, 9, 10 and 11 are perspective views of parts of machines which are implemented according to alternative embodiments of the invention.

It should be noted that everything found to be already known during the patenting process is understood not to be claimed and to be the subject of a disclaimer.

With reference to the figures, the reference numeral 10 generally indicates a machine for surface machining, particularly adapted for machining low-thickness parts, that has the distinctive characteristic of comprising
- a footing 11,
- a supporting fixture 12 for a part to be machined, which forms a work area, associated with the footing 11, for the part,
- two working heads 13 and 14, which comprise tools 15 and means 16 for actuating the tools 15,
- an articulated supporting structure 16, which is associated with the footing 11 and supports the working heads 13 and 14 in a configuration that can be modulated with respect to the work area,
- means 17 for setting the maximum penetration A of the tools 15 with respect to the surface B of a part to be machined which is arranged in the work area,
- means 18 for limiting the action force C of the working heads 13 and 14 on the part to be machined which is arranged in the work area.

Advantageously, a first tool of the tools 15 is a peripheral-action tool 19, which is conveniently supported by a first working head 13 of the working heads 13 and 14.

The means 17 for setting the maximum penetration A conveniently comprise a jacket 20 which encloses the peripheral-action tool 19 and has, at a region 21 of abutment with the part to be worked, a lateral slot 22 for exposing the peripheral-action tool 19.

The jacket 20 is conveniently supported by the first working head 13 so as to allow modulation of the protrusion of the peripheral-action tool 19 from the jacket 20, through the slot 22.

In use, such protrusion defines the maximum penetration A of a tool 15 into the surface B of the part to be worked.

Specifically, the jacket 20 preferably comprises
- a sleeve 23, which is provided with the slot 22, and
- a base 24 of the sleeve 23, which is conveniently integral with it and supported by the first working head 13 so that it can rotate with respect to a rotation axis D which is substantially parallel to the working axis E of the peripheral-action tool 19, the sleeve 23 having a longitudinal axis F which is eccentric with respect to the rotation axis D.

Preferably, the jacket 20 further comprises a connector 25 for connecting the base 24 to the first working head 13, the connector 25 being associated with the first working head 13 so that it can rotate substantially with respect to the working axis E.

Moreover, the base 24 is conveniently associated with the connector 25 so that it can rotate about the rotation axis D.

More specifically, the connector 25, which conveniently is tubular on the inside, is conveniently fitted over a cylindrical stem 26 of the first working head 13 and the base 24, which is conveniently cylindrical, is inserted in a cylindrical seat 27 of the connector 25.

For locking the connector 25 in position with respect to the cylindrical stem 26, and the base 24 with respect to the connector 25, grub screws 28 are conveniently provided which are coupled with threaded seats 29 provided as through seats in the connector 25.

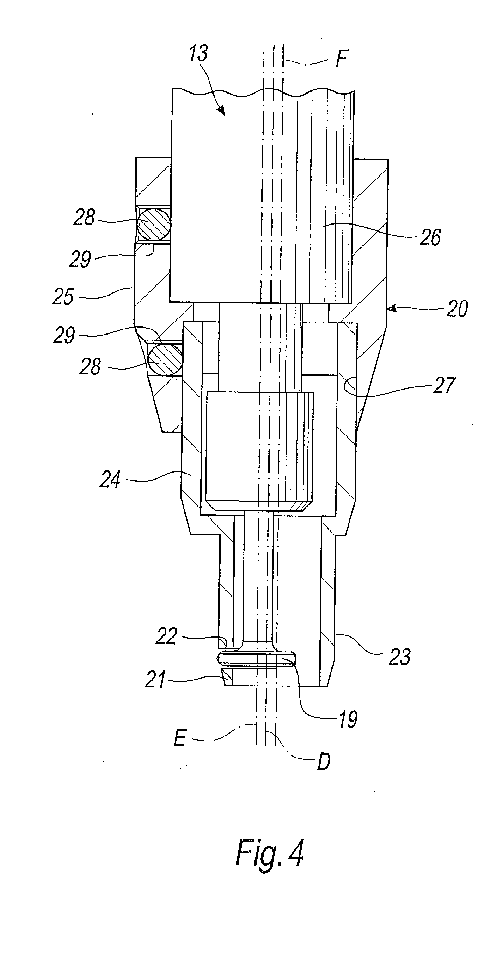

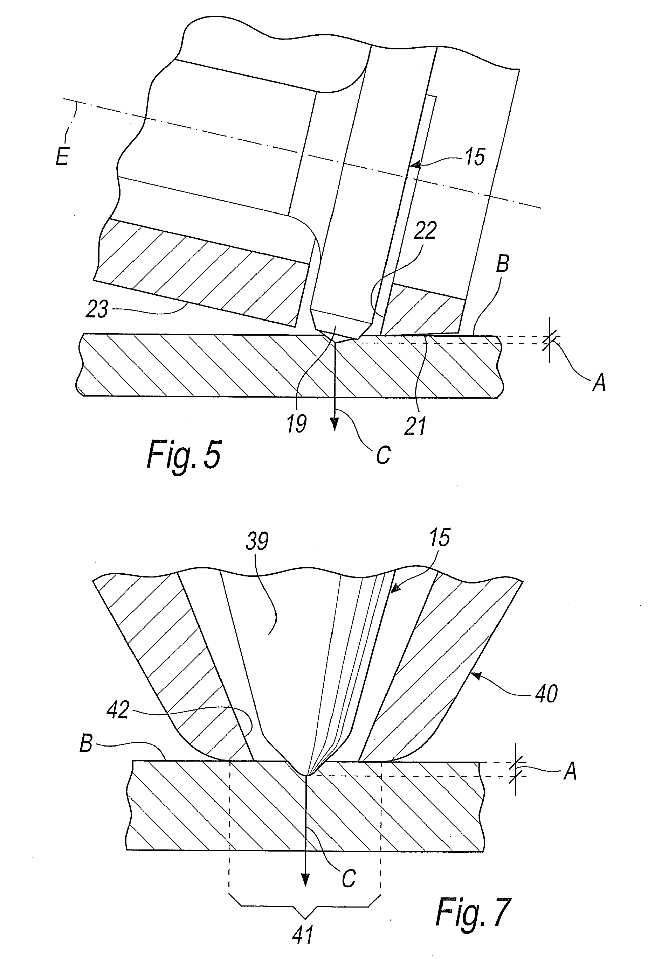

In this way, with particular reference to Figures 4 and 5, the protrusion of the peripheral-action tool 19, through the slot 22, can be modulated by adjusting the eccentricity of the sleeve 23 with respect to the working axis E.

This adjustment can be achieved by rotating the connector 25 on the cylindrical stem 26 and the sleeve 23 with respect to the connector 25. Indeed, these turns modulate the eccentricity of the longitudinal axis F of the sleeve 23 with respect to the working axis E.

By tightening the grub screws 28, the configuration thus obtained is fixed, which corresponds to a value of maximum penetration A set by the selected protrusion.

The means 18 for limiting the action force C advantageously comprise
- an oscillation joint 30, which connects in an oscillating manner the first working head 13 to an arm 31 of the articulated supporting structure 16, and
- elastic means 32 for contrasting the oscillation of the first working head 13 with respect to the arm 31.

The oscillation joint 30 is conveniently implemented with a spherical ball-bearing joint which connects the working head 13 to the arm 31.

In particular, the oscillation joint 30 defines a fulcrum G for oscillation of the working head 13 with respect to the arm 31.

Moreover, the elastic means 32 conveniently comprise an elastically yielding ring 33 which surrounds the working head 13 and is interposed between the working head 13 and a radial abutment 34 which is provided in the arm 31, the radial abutment 34 being coaxial to the working axis E.

Conveniently, there are provided means of modulating the elastic response of the ring 33, which advantageously are implemented with a compression ferrule 35 adapted to compress the ring 33 in a manner which can be modulated.

In particular, the ring 33 is conveniently comprised axially between the compression ferrule 35 and an abutment surface 36 of the arm 31 that accommodates the ferrule 35.

In this way, by modulating the axial compression of the ring 33, which is exercised by tightening the compression ferrule 35 so as to push it against the abutment surface 36, it is possible to impose an elastic radial deformation of the ring 33.

This deformation corresponds to a preloading force which contrasts the oscillation of the first working head 13 with respect to the fulcrum G.

The preloading determines the dynamic response of the ring 33, which contrasts this oscillation.

The orientation of the region 21 of abutment, for machining the various faces of a piece, is conveniently obtained by the rotation of the jacket 20 about the working axis D.

In particular, this rotation of the jacket 20 is obtained by rotation, about the working axis D, of the first working head 13 that supports the jacket 20.

In order to actuate this rotation of the first working head 13 there is provided, advantageously, a motor 37, which is supported by the arm 31 and is coupled to the first working head 13 by means of a mechanical transmission with a constant transmission ratio, such as for example a toothed belt transmission 3 8, which is advantageously elastically yielding so as to allow the oscillation of the first working head 13 with respect to the fulcrum G.

In particular, the oscillation joint 30 conveniently supports, on the arm 31, the first working head 13, so that it can rotate about the working axis D.

Advantageously, a second tool of the tools 15 is a front-acting tool 39, which is conveniently supported by the second working head 14, of the working heads 13 and 14.

The means 17 for setting the maximum penetration A preferably comprise a tip 40 which encloses the front-acting tool 19 and has, at a region 41 for resting against the part to be worked, an extension hole 42 for the front-acting tool 39.

The tip 40 is conveniently supported by the second working head 14 so as to allow modulation of the protrusion of the front-acting tool 39 from the tip 40, through the extension hole 42.

The protrusion defines the maximum penetration A of the front-acting tool 39 into the surface B of the part to be worked.

Preferably, the means 17 for setting the maximum penetration A moreover comprise a threaded coupling 43 between the tip 40 and the second working head 14.

In particular, the threaded coupling 43 conveniently comprises
- a threaded sleeve 44, which is integral with the second working head 14, and
- a threaded collar 45, which is screwed onto the threaded sleeve 44, and projects beyond the end of the tip 40 which is opposite to the end with the resting region 41.

Conveniently, the means 17 for setting the maximum penetration A furthermore comprise a locking ring 46, which is advantageously screwed onto the threaded sleeve 44, and is adapted to lock the tip 40 in a preselected position of extension with respect to the second working head 14.

This chosen position of extension is set by modulating the tightening of the tip 40 on the second working head 14, and defines the maximum penetration A of the front-acting tool 39 into the surface B of the part being machined.

Moreover, the means 18 for limiting the action force C advantageously comprise
- a sliding joint 47, which connects the second working head 14 to the arm 31 so that it can slide substantially along the actuation axis F of the front-acting tool 39,
- means for contrasting the penetration of the second working head 13 toward the arm 31, such means being elastically yielding, and conveniently comprising a compression spring 48.

In particular, the compression spring 48 conveniently surrounds the second working head 13 and is longitudinally interposed between an annular abutment 49 which is integral with the second working head 14, and an axial shoulder 50 inside the arm 31 and annular with respect to the second working head 14.

These contrast means advantageously also comprise an adjustment ferrule 51, for adjusting the preload of the compression spring 48.

Moreover, the adjustment ferrule conveniently defines the annular abutment 49.

In general, in alternative embodiments of the machine according to the invention, this adjustment ferrule can be substituted by equivalent means for adjusting the preload of the compression spring.

By means of the action of the adjustment ferrule 51, the force of the compression spring 48 can thus be adjusted in the direction of a part to be machined upon which the tip 41 rests, such force defining the maximum provided value for the action force C.

Therefore, according to the characteristics of the part to be machined, the adjustment of the maximum action force C makes it possible to prevent denting of its surface B during machining.

In alternative embodiments of the invention, all of which are within the scope of the appended claims, a machine 10 can provide only one of the working heads 13 and 14, thus alternatively presenting the peripheral-action tool 19 or the front-acting tool 39.

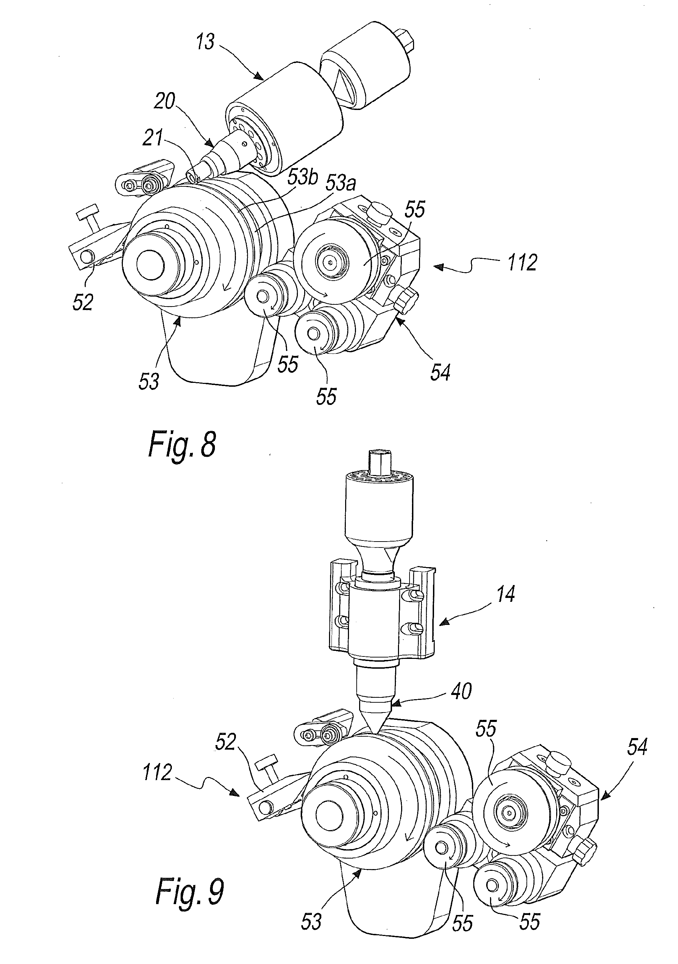

With particular reference to Figures 8, 9, 10 and 11, in alternative embodiments of the machine according to the invention, the machine can be fitted for machining chains, as in a first configuration for example shown in Figures 8 and 9.

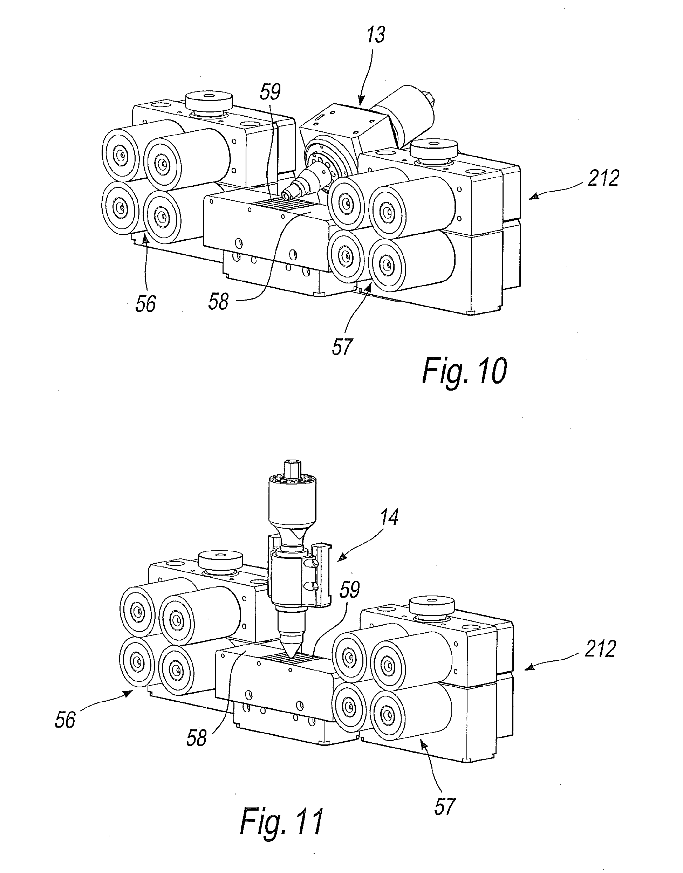

Alternatively, it can be fitted for machining products which have a face to be machined that is substantially flat such as bands or the like, as in a second configuration for example shown in Figures 10 and 11.

In the first configuration the machine according to the invention has the supporting fixture 112 which comprises a guide 52 adapted to lay the product, in a controlled manner, on a locking assembly 53 which is situated beside the guide 52.

The locking assembly 53 is constituted, for example, by rotating disks 53a and 53b or by a vise.

Situated beside the locking assembly 53, opposite to the guide 52, there is an assembly 54 for advancing the machined product, which is generally formed by rollers 55.

Respectively, in Figures 8 and 9 two versions are shown of a machine according to the invention, the machine in the first version being provided with the first working head 13, and the machine in the second version being provided with the second working head 14.

In this second configuration, a machine according to the invention has the supporting fixture 212 which comprises a first group of rollers 56 and a second group of rollers 57 which are adapted to move the part to be machined into the work area that the two groups define between themselves.

The groups of rollers 56 and 57, in addition to actuating the movement of the part to be machined, also determine its tension.

Moreover, the supporting fixture 212 in the second configuration comprises
- a table 58 for supporting the part to be machined,
- a device for locking the part to be machined on the supporting table 58, which is conveniently implemented with a pneumatic device 59 for aspirating the piece on the supporting table 58.

Again, respectively, in Figures 10 and 11 two versions are shown of a machine according to the invention, in the second configuration, the machine in the first version being provided with the first working head 13, and the machine in the second version being provided with the second working head 14.

For allowing an ample operating flexibility of the machine 10, according to the invention, the articulated supporting structure 16 advantageously also comprises
- a first slider 59, which is supported by the footing 11 so that it can slide along a first axis H,
- a second slider 60, which is supported by the first slider 59 so that it can slide along a second axis L which is substantially perpendicular to the first axis H,
- a third slider 61, which is supported by the second slider 60 so that it can slide along a third axis M which is substantially perpendicular to the first axis H and to the second axis L,
- a shoulder 62, which is supported by the third slider 61 so that it can turn according to a rotation P,
- a cross-type slider 63 for the articulation of the arm 31 to the shoulder 62.

The operation of the machine according to the invention is as follows. The operator prepares the machine 10 for machining, by setting
- the maximum penetration A of the tools 15 into the surface B of the part to be worked,
- the maximum value for the action force C.

In particular, setting the maximum penetration A involves the adjustment
- of the protrusion of the peripheral-action tool 19 from the slot 22 of the jacket 20, for the first working head, and/or
- of the protrusion of the front-acting tool 39 from the extension hole 42 of the tip 40, for the second working head 14.

The maximum value of the action force C is set, for the first working head 13, by acting on the compression ferrule 35 so as to set a preload of the ring 33.

And for the second working head 14, the limit of the action force C is set by acting on the adjustment ferrule 51.

In this way, during machining the working heads 13 and 14 are resting on the part to be machined with an action force C which does not exceed the maximum that was set by the operator and is based for example on the pliability of the part to be machined, so as to prevent dents thereon.

In practice it has been found that the invention fully achieves the intended aim and objects by providing a machine for surface machining, particularly adapted for machining low-thickness parts, which makes it possible to carry out the decorative machining of objects which are pliable and/or of low thickness, by limiting the stress exercised on the part being worked on and adapting itself, thus compensating for any defects in shape or size or positioning of the part.

A machine according to the invention makes it possible in particular to prevent dents, the perforation, or the cutting through of the parts being worked on, thanks to the limitation of the action force which the working head exercises on them.

Moreover, for the machine according to the invention the shapes or types of objects to be worked on are not critical, and in particular it makes it possible to easily work on pipes, chains, and plates or on complex pieces with concave or convex parts, and/or corrugated surfaces.

The invention thus conceived is susceptible of numerous modifications and variations, all of which are within the scope of the appended claims; moreover, all the details may be substituted by other, technically equivalent elements.

In practice the materials employed, as well as the dimensions and the contingent shapes, may be any according to requirements and to the state of the art.

The disclosures in Italian Patent Application No. PD2009A000370 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A machine for surface machining, particularly adapted for machining low-thickness parts, **characterized in that** it comprises
- a footing (11),
- a supporting fixture (12) for a part to be machined, which forms a work area for said part, associated with said footing (11),
- at least one working head (13, 14), which comprises at least one tool (15) and means (16) for actuating said at least one tool (15),
- an articulated supporting structure (16), which is associated with said footing (11) and supports said at least one working head (13, 14) in a configuration that can be modulated with respect to said work area,
- means (17) for setting the maximum penetration (A) of said at least one tool (15) with respect to the surface (B) of said part to be machined which is arranged in said work area,
- means (18) for limiting the action force (C) of said working head (13, 14) on said part to be machined which is arranged in said work area.

2. The machine according to claim 1, **characterized in that** said at least one tool (15) comprises a peripheral-action tool (19), said means (17) for setting maximum penetration (A) comprising a jacket (20) which encloses said peripheral-action tool (19) and has, at a region (21) of abutment with said part to be worked, a lateral slot (22) for exposing said peripheral-action tool (19), said jacket (20) being supported by said at least one working head (13) in a manner that allows modulation of the protrusion of said peripheral-action tool (19) from said jacket (20), through said slot (22), said protrusion defining said maximum penetration (A).

3. The machine according to claim 2, **characterized in that** said jacket (20) comprises
- a sleeve (23), which is provided with said slot (22),
- a base (24) of said sleeve (23), which is supported by said at least one working head (13) so that it can rotate with respect to a rotation axis (D) substantially parallel to the working axis (E) of said peripheral-action tool (19), said sleeve having an extension axis (F) which is eccentric with respect to said rotation axis (D).

4. The machine according to claim 3, **characterized in that** said jacket (20) further comprises a connector (25) for connecting said base (24) to said at least one working head (13), said connector (25) being associated with said at least one working head (13) so that it can rotate substantially with respect to said working axis (E), said base (24) being further associated with said connector (25) so as to allow rotation about said rotation axis (D).

5. The machine according to one or more of the preceding claims, **characterized in that** said means (18) for limiting the action force (C) comprise
- an oscillation joint (30), which connects in an oscillating manner said at least one working head (13) to an arm (31) of said articulated supporting structure (16),
- elastic means (32) for contrasting the oscillation of said at least one working head (13) with respect to said arm (31).

6. The machine according to claim 5, **characterized in that** said oscillation joint (30) comprises a spherical ball-bearing joint which connects said at least one working head (13) to said arm (31).

7. The machine according to one or more of claims 5 and 6, **characterized in that** said elastic means (32) comprise an elastically yielding ring (33), which surrounds said at least one working head (13) and is interposed between said working head and a radial abutment (34) of said arm (31) which is coaxial to said working axis (E).

8. The machine according to claim 7, **characterized in that** it comprises means for modulating the elastic response of said ring (33).

9. The machine according to claim 1, **characterized in that** said at least one tool (15) comprises a front-acting tool (39), said means (17) for setting the maximum penetration (A) comprising a tip (40) which encloses said front-acting tool (39) and has, at a region (41) for resting against said part to be machined, an extension hole (42) of said front-acting tool (39), said tip (40) being supported by said at least one working head (14) so as to allow modulation of the protrusion of said front-acting tool (39) from said tip (40), through said extension hole (42), said protrusion defining said maximum penetration (A).

10. The machine according to claim 9, **characterized in that** said means (17) for setting the maximum penetration (A) furthermore comprise a threaded coupling (43) between said tip (40) and said at least one working head (14).

11. The machine according to claim 10, **characterized in that** said means (17) for setting the maximum penetration (A) furthermore comprise a ring (46) for locking said tip (40) in a preselected extension with respect to said at least one working head (14), said preselected extension being set by modulation of the screwing of said tip (40) onto said at least one working head (14).

12. The machine according to one or more of claims 1, 9, 10 and 11, **characterized in that** said means (18) for limiting the action force (C) comprise
- a sliding joint (47), which connects said at least one working head (14) to an arm (31) of said articulated supporting structure (16) so that it can slide substantially along the actuation axis (F) of said front-acting tool (39),
- elastically yielding means (48) for contrasting the penetration of said at least one working head (14) with respect to said arm (31).

13. The machine according to claim 12, **characterized in that** said contrast means comprise a compression spring (48) which surrounds said at least one working head (14) and is interposed longitudinally between an annular abutment (49), which is jointly connected to said at least one second working head (14), and an axial shoulder (50), which is inside said arm (31).

14. The machine according to claim 13, **characterized in that** said contrast means comprise means for adjusting the preload of said compression spring (48).

15. The machine according to one or more of the preceding claims, **characterized in that** said articulated supporting structure (16) comprises
- a first slider (59), which is supported by said footing (11) so that it can slide along a first axis (H),
- a second slider (60), which is supported by said first slider (59) so that it can slide along a second axis (L) which is substantially perpendicular to said first axis (H),
- a third slider (61), which is supported by said second slider (60) so that it can slide along a third axis (M) which is substantially perpendicular to said first axis (H) and to said second axis (L),
- a shoulder (62), which is supported by said third slider (61) so that it can turn according to a rotation (P),
- a cross-type slider (63) for the articulation of said arm (31) to said shoulder (62).
